# EUROPÄISCHE PATENTANMELDUNG

(11) **EP 0 574 706 A1**
(43) Veröffentlichungstag der Anmeldung: **22.12.1993**
(21) Anmeldenummer: 93107851.3
(22) Anmeldetag: 14.05.1993
(51) Int. Cl.: H04N 11/16, H04N 9/83

(54) **Verfahren zur PAL-Decodierung und zugehöriger PAL-Decoder**

(30) Priorität: 19.06.1992 DE 4219963
(71) Anmelder: GRUNDIG E.M.V. Elektro-Mechanische Versuchsanstalt Max Grundig & Co. KG., D-90762 Fürth (DE); IR3 Video International GmbH, 90471 Nürnberg (DE)
(72) Erfinder: Hofmann, Norbert, Dipl.-Ing., GRUNDIG E.M.V., Kurgartenstrasse 37, W-8510 Fürth/Bay (DE)
(74) Vertreter: Dreykorn-Lindner, Werner, Dipl.-Ing.

(57) **Zusammenfassung**

Bei der magnetischen Aufzeichnung von Videosignalen ist es bekannt, zur Qualitätsverbesserung der Farbwiedergabe aus unterabgetasteten Farbdifferenzsignalen erzeugte Chrominanzsignale aufzuzeichnen. Die Unterabtastung wird bei der Wiedergabe rückgängig gemacht, wodurch ein gegenüber der Aufzeichnungsbandbreite bandbreitenvergrößertes Chrominanzsignal zur Verfügung steht.

Bei der Verarbeitung von PAL-codierten Chrominanzsignalen kann diese Bandbreitenvergrößerung nicht erreicht werden, da, bedingt durch die zeilenweise Umpolung der Trägerphase einer der beiden Chrominanzsignalkomponenten, der bei der Unterabtastung gewonnene zusätzliche Informationsgehalt bei der Demodulation verloren geht.

Bei der vorliegenden Erfindung wird das geschilderte Problem dadurch gelöst, daß für die Demodulation jeder Komponente des Chrominanzsignals ein Quadraturdemodulator zur Verfügung gestellt wird, und daß die durch Demodulation mit gleichen Demodulationsfrequenzen gewonnenen Farbdifferenzsignalanteile von Addierern zu den bandbreitenvergrößerten Farbdifferenzsignalen zusammengefaßt werden.

## Beschreibung

Die Erfindung betrifft ein Verfahren zur PAL-Decodierung und einen zugehörigen PAL-Decoder, zum Decodieren eines PAL-Chrominanzsignals_{,} welches aus unterabgetasteten Farbdifferenzsignalen gebildet wurde.

Bei bekannten Systemen zur magnetischen Aufzeichnung von PAL-Videosignalen erfolgt die Aufzeichnung der Videosignale in benachbarte Schrägspuren auf ein Magnetband. In jede der Schrägspuren wird dabei ein Halbbild aufgezeichnet Ein weit verbreitetes System dieser Art ist beispielsweise das Video-Home-System (VHS). Das komplexe Videosignal wird zur Aufzeichnung in das in ihm enthaltene Chrominanzsignal und das Luminanzsignal getrennt. Das Luminanzsignal wird für die Aufzeichnung frequenzmoduliert. Das quadraturmodulierte Chrominanzsignal, das der Farbträgerfrequenz bei 4,43 MHz aufmoduliert ist, wird mit einer Hilfsfrequenz gemischt, so daß sich durch Differenzbildung ein Hilfsträger mit einer Frequenz von 626,9 kHz ergibt. Damit liegt das Chrominanzsignal in einem Frequenzbereich unterhalb des unteren Seitenbands des frequenzmodulierten Luminanzsignals und kann deshalb gleichzeitig mit diesem aufgezeichnet werden. Wegen der Konvertierung des Chrominanzsignals in eine Frequenzlage unterhalb des Luminanzsignals wird dieses Aufzeichnungsverfahren Color-Under-Verfahren genannt.

Eine genauere Beschreibung bekannter magnetischer Aufzeichnungsverfahren für Videosignale kann beispielsweise dem Buch "Videorecorder-Technik" von Friedrich Manz, 2. Auflage, 1982, Vogel-Verlag, entnommen werden.

Besondere Probleme bezüglich der Wiedergabequalität bereitet das Chrominanzsignal, da es auf eine Bandbreite von etwa 400 kHz beschränkt ist. Diese Beschränkung ergibt sich für die niedrigen Frequenzen durch das Frequenzverhalten der Videomagnetköpfe und des rotierenden Übertragers, für die hohen Frequenzen durch das untere Seitenband des frequenzmodulierten Luminanzsignals. Für die horizontale Auflösung des Chrominanzsignals bedeutet die zur Verfügung stehende Bandbreite, daß ungefähr 30 Linien darstellbar sind.

Zur Verbesserung der Wiedergabequalität magnetisch aufgezeichneter Chrominanzsignale ist es bekannt, die das Chrominanzsignal bildenden Farbdifferenzsignale U und V vor der Quadraturmodulation und Aufzeichnung unterabzutasten. Dadurch ist eine Aufzeichnung von Chrominanzsignalen in der zur Verfügung stehenden Bandbreite von 400 kHz möglich, die eine Bandbreite von 700 kHz bei der Wiedergabe ergibt. Der damit nahezu erreichten Verdopplung der horizontalen Auflösung steht die Halbierung der vertikalen Auflösung entgegen, die aber hinsichtlich der bei VHS-Aufzeichnungen systembedingt gegebenen besseren vertikalen Auflösung akzeptiert werden kann.

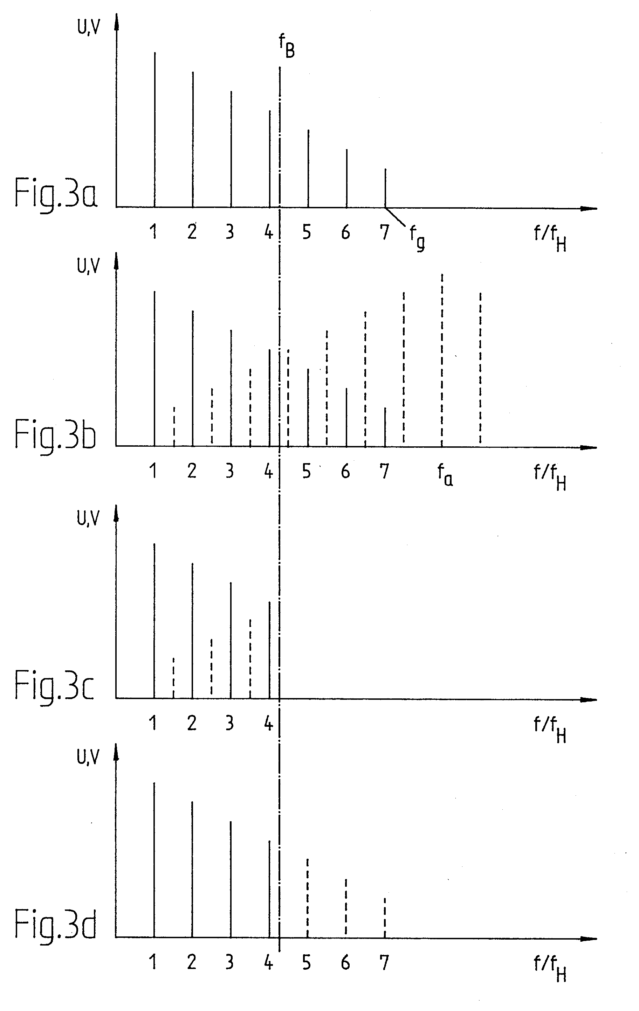

Den Hintergrund der beschriebenen Bandbreitenvergrößerung für die horizontale Auflösung bildet die Tatsache, daß die das Chrominanzsignal bildenden Farbdifferenzsignale ein Spektrum aufweisen, das sich aus Harmonischen der Zeilenfrequenz f_{H} zusammensetzt. Für rein vertikale Bildinhalte liegt ein Spektrum vor, das nur bei den Vielfachen der Zeilenfrequenz f_{H} Spektralanteile aufweist. Ein derartiges Spektrum zeigt in vereinfachter Form Figur 3a. Damit das Verfahren auch für beliebige und bewegte Bildinhalte anwendbar ist, die Spektralanteile auch an Stellen aufweisen, die keine Vielfachen der Zeilenfequenz f_{H} sind, muß eine vertikale Vorfilterung der Farbdifferenzsignale vorgenommen werden. Dabei werden Spektralanteile bei ungeraden Vielfachen der halben Zeilenfrequenz f_{H} beispielsweise durch ein Zeilenkammfilter entfernt, wodurch die erwähnte Halbierung der vertikalen Auflösung verursacht wird.

Der Bandbreitengewinn läßt sich mittels des aus der Systemtheorie bekannten Abtasttheorems erklären. Dieses besagt, daß zur Abtastung eines Basisbandsignals mit einer Grenzfrequenz f_{g} eine Abtastfrequenz fₐ nötig ist, die mindestens doppelt so groß wie die Grenzfrequenz f_{g} sein muß. Bei Nichteinhaltung der Forderung des Abtasttheorems wird das durch die Abtastung entstehende Basisbandsignal von Spiegelfrequenzen der Oberwellenspektren überlagert und damit irreversibel gestört. Diese Überlagerung ist auch als Aliasing bekannt.

Im Fall der Farbdifferenzsignale, die ein Spektrum aus Harmonischen der Zeilenfrequenz f_{H} aufweisen, kann das Aliasing allerdings zur Vergrößerung der übertragbaren Signalbandbreite genutzt werden. Dazu wird eine Abtastfrequenz fₐ gewählt, die kleiner als die doppelte Grenzfrequenz f_{g} der Farbdifferenzsignale ist. Die Abtastfrequenz wird als Vielfaches der Zeilenfrequenz f_{H} festgelegt, mit einem Offset von einer halben Zeilenfrequenz f_{H.} Durch den Halbzeilenoffset wird bewirkt, daß die durch das Aliasing überlagerten Spiegelfrequenzen in die Lücken zwischen die bei ganzen Vielfachen der Zeilenfrequenz f_{H} liegenden Spektralanteil des Basisbandsignals gefaltet werden. Figur 3b zeigt das bei der Unterabtastung des Spektrums aus Figur 3a entstehende Spektrum. Durchgezogene Linien bedeuten Spektralanteile des Basisbandsignals, gestrichelte Linien Spektralanteile des Oberwellenspektrums. Daraus wird ersichtlich, daß es durch die Unterabtastung möglich ist, in der zur Verfügung stehenden Bandbreite maximal den doppelten Informationsgehalt zu übertragen, was einer Verdoppelung der nutzbaren Bandbreite entspricht. In Figur 3c ist das Spektrum des auf die Aufzeichnungsbandbreite begrenzten Unterabtastsignals dargestellt. Figur 3d stellt das Basisbandspektrum des daraus wiedergewonnenen Signals dar, wie es sich nach erneuter Unterabtastung und Filterung der Spektralanteile bei ungeradzahligen Vielfachen der halben Zeilenfrequenz f_{H} ergibt.

Ein Videorecorder für die Aufzeichnung und Wiedergabe bandbreitenvergrößerter Chrominanzsignale wird in dem Brief "Chrominance Bandwidth Expansion of Color-under VCR", erschienen in THE TRANSACTIONS OF THE IEICE, VOL. E72, NO. 4 APRIL 1989, beschrieben. Das aufzuzeichnende Chrominanzsignal wird durch die Modulation der unterabgetasteten Farbdifferenzsignale gewonnen. Zur Bildung der Basisbandsignale werden die Farbdifferenzsignale durch Tiefpaßfilter mit einer Grenzfrequenz von 700 kHz begrenzt. Die Basisbandsignale der Farbdifferenzsignale werden mit einer Abtastfrequenz fₐ unterabgetastet, die das 50,5-fache der Zeilenfrequenz f_{H} ist und werden auf die zur Verfügung stehende Bandbreite von 400 kHz begrenzt. Die so verarbeiteten Farbdifferenzsignale werden einem Modulator zugeführt, der aus ihnen das Chrominanzsignal für die magnetische Aufzeichnung erzeugt. Für die Rückgewinnung der Farbdifferenzsignale bei der Wiedergabe werden nach der Demodulation des Chrominanzsignals die Farbdifferenzsignale erneut mit dem 50,5-fachen der Zeilenfrequenz f_{H} abgetastet. Das dabei entstehende Basisbandspektrum wird durch die Spiegelfrequenzen des Oberwellenspektrums so ergänzt, daß die Rückgewinnung der Farbdifferenzsignale mit einer Bandbreite von 700 kHz möglich ist. Die im Spektrum vorhandenen Spektralanteile bei ungeradzahligen Vielfachen der halben Zeilenfrequenz f_{H} werden mit einem Zeilenkammfilter entfernt und zur weiteren Verarbeitung werden die Farbdifferenzsignale mit Tiefpaßfiltern mit einer Grenzfrequenz von 700 kHz begrenzt.

In dem erwähnten Brief wird keine Aussage über den Aufbau des verwendeten Demodulators gemacht. Der Aufbau des Demodulators ist aber, besonders im Zusammenhang mit der Verarbeitung von PAL-Chrominanzsignalen, von großer Bedeutung.

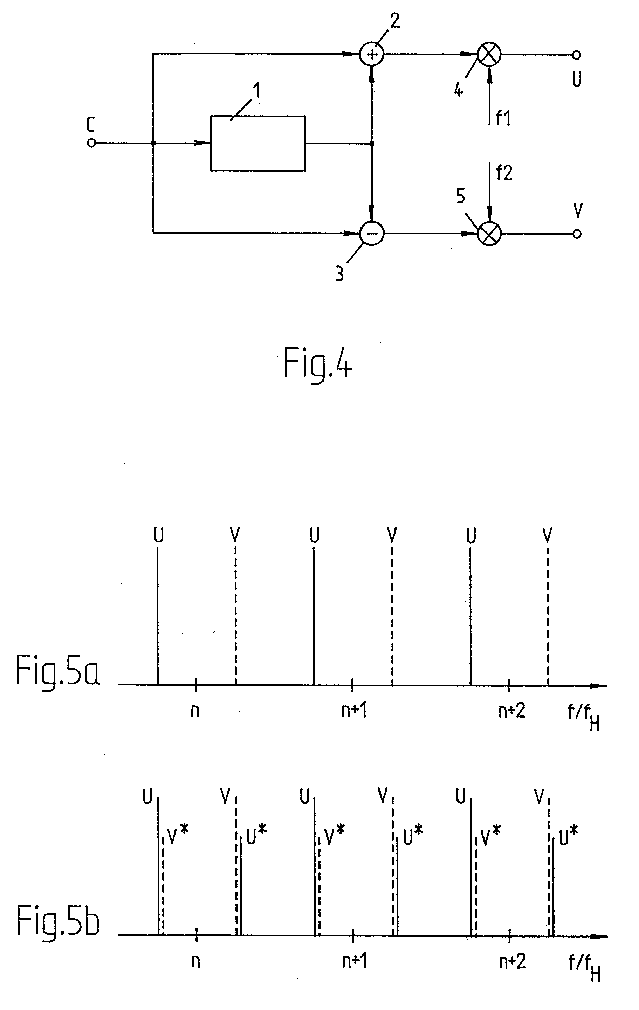

Bekanntlich werden beim PAL-Verfahren Phasenfehler kompensiert, die durch Phasenverschiebungen hervorgerufen werden, welche das Chrominanzsignal auf dem Übertragungsweg erfahren hat. Dieser Effekt wird dadurch erreicht, daß die Phasenlage einer der beiden zueinander orthogonalen Komponenten (das modulierte V-Farbdifferenzsignal) des Chrominanzsignals zeilenweise um 180^{o} umgepolt wird. Damit tritt der Phasenfehler auf der Empfangsseite abwechselnd in positiver und negativer Richtung auf. Durch eine Addition der Chrominanzsignale von zwei aufeinander folgenden Zeilen kompensiert sich der Phasenfehler. Diese Fehlerkompensation ist auch als PAL-Mittelung bekannt und kann durch den in Figur 4 dargestellten PAL-Decoder erreicht werden. Der PAL-Decoder besteht aus zwei Synchrondemodulatoren 4 und 5 und aus dem PAL-Laufzeitdecoder, der eine Verzögerungseinrichtung 1, einen Addierer 2 und einen Subtrahierer 3 aufweist. Das Chrominanzsignal C wird der Verzögerungseinrichtung 1, welche das Chrominanzsignal C um eine Zeilendauer verzögert, dem Addierer 2 und dem Subtrahierer 3 zugeführt. Am Addierer 2 kann die U-Komponente des Chrominanzsignals abgegriffen werden, am Subtrahierer die V-Komponente. Die Synchrondemodulatoren 4 und 5 werden mit zueinander orthogonalen Frequenzen f₁ und f₂ betrieben, die der Frequenz des Farbträgers entsprechen. Die U- und V-Komponente des Chrominanzsignals werden demoduliert, so daß an den Ausgängen der Synchrondemodulatoren 4 bzw. 5 die Farbdifferenzsignale U bzw. V zur Verfügung stehen. Bei der Demodulation wird, entsprechend der Modulation, die Phasenlage der Demodulationsfrequenz f₂ zeilenweise um 180^{o} umgepolt.

Die bei der Modulation vorgenommene zeilenweise Phasenumschaltung des Farbträgers des V-Farbdifferenzsignals bewirkt, daß die U- und V-Frequenzanteile jeweils einen Abstand von einer halben Zeilenfrequenz f_{H} im Frequenzspektrum aufweisen. Einen Ausschnitt aus dem beschriebenen Spektrum des Chrominanzsignals zeigt Figur 5a.

Zur Wahrung der Aufzeichnungskompatibilität bei der VHS-Aufzeichnung nach dem PAL-Verfahren müssen die unterabgetasteten Farbdifferenzsignale vor der Color-Under-Frequenzumsetzung entsprechend des PAL-Verfahrens moduliert werden. Dabei besetzen die Faltungsanteile des einen Farbdifferenzsignals die Frequenzbereiche des jeweils anderen Farbdifferenzsignals, wie in Figur 5b dargestellt. An den Stellen der U-Spektralanteile befinden sich nun außerdem die gefalteten V*-Spektralanteile und an den Stellen der V-Spektralanteile befinden sich zusätzlich die gefalteten U*-Spektralanteile. Bei der Wiedergabe eines so zusammengesetzten Chrominanzsignals werden bei der Demodulation der beiden Komponenten des Chrominanzsignals die durch die Unterabtastung erzeugten Faltungsanteile der jeweils anderen Komponente herausgefiltert. Die Filterung wird dadurch verursacht, daß der nach dem Laufzeitdecoder vorhandene V*-Signalanteil, der zusammen mit der U-Komponente des Chrominanzsignals auftritt, mit dem Synchrondemodulator der U-Komponente des Chrominanzsignals nicht demoduliert werden kann, da die Trägerfrequenzen der Chrominanzsignalkomponenten orthogonal zueinander sind. Entsprechendes gilt für die Demodulation der V-Komponente des Chrominanzsignals und der mit ihr verbundenen U*-Singnalanteile.

Die Aufgabe der vorliegenden Erfindung ist es deshalb, ein Verfahren und einen zugehörigen PAL-Decoder anzugeben, der zum Decodieren eines PAL-Chrominanzsignals dient, welches aus unterabgetasteten Farbdifferenzsignalen gebildet wurde, ohne dabei die bei der Unterabtastung überlagerten Signalanteile herauszufiltern.

Erfindungsgemäß erfolgt die Lösung der Aufgabe dadurch, daß jede der Komponenten des Chrominanzsignals zusätzlich orthogonal demoduliert wird, und daß die jeweils phasengleich demodulierten Signale addiert werden. Bei dem zugehörigen PAL-Decoder ist dafür für jede der durch den PAL-Laufzeitdecoder getrennten Komponenten des Chrominanzsignals ein zweiter Synchrondemodulator vorhanden, der jeweils zusammen mit dem ersten Synchrondemodulator einen Quadraturdemodulator bildet. Dadurch können die auf die spektralen Positionen des jeweils anderen Farbdifferenzsignals gefalteten Signalanteile demoduliert werden und mittels zweier zusätzlicher Addierer dem zugehörigen Farbdifferenzsignal hinzugefügt werden.

Im folgenden soll das erfindungsgemäße Verfahren und der zugehörige PAL-Decoder anhand von Figuren näher beschrieben werden.

Es zeigen:
Figur 1 das Blockschaltbild eines erfindungsgemäß erweiterten PAL-Decoders,
Figur 2 das Blockschaltbild einer Einrichtung zur Luminanz- und Chrominanzsignalverarbeitung, das prinzipiell sowohl für die Aufzeichnung als auch für die Wiedergabe eines bandbreitenvergrößerten Chrominanzsignals verwendet werden kann,
Figur 3 vereinfachte Spektren von Farbdifferenzsignalen,
Figur 4 das Blockschaltbild eines PAL-Decoders nach dem Stand der Technik, und
Figur 5 Ausschnitte aus dem Spektrum von PAL-Chrominanzsignalen.

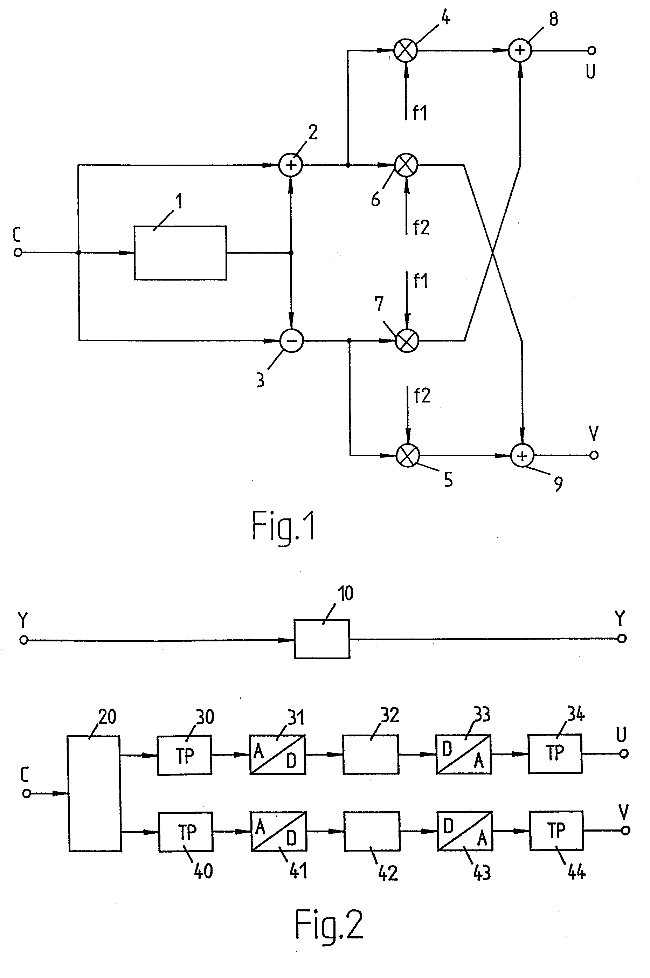

Eine mögliche Einrichtung zur Aufzeichnungs- und Wiedergabeverarbeitung von Luminanz- und Chrominanzsignalen, die die Verarbeitung eines bandbreitenvergrößerten Chrominanzsignals erlaubt, weist nach dem Blockschaltbild der Figur 2 für die Verarbeitung des Chrominanzsignals C einen PAL-Decoder 20 sowie zwei gleiche Signalverarbeitungszweige für die vom PAL-Decoder 20 stammenden Farbdifferenzsignale auf.
Die beiden Signalverarbeitungszweige weisen Tiefpaßfilter 30 bzw. 40, Analog/Digital-Wandler 31 bzw. 41, Filtereinrichtungen 32 bzw. 42, Digital/Analog-Wandler 33 bzw. 43 sowie Tiefpaßfilter 34 bzw. 44 auf. Für das Luminanzsignal Y ist im wesentlichen eine Verzögerungseinrichtung 10 vorgesehen, welche eine Verzögerungszeit aufweist, die der Verzögerung entspricht, welche das Chrominanzsignal durch den PAL-Decoder 20 bzw. die Farbdifferenzsignale durch die beiden Signalverarbeitungszweige erfahren. Auf die Darstellung weiterer Bestandteile der Aufzeichnungs- und Wiedergabeeinrichtung wurde verzichtet, da diese für sich bekannt sind und nicht zum Verständnis der Erfindung beitragen.

Im Fall der Aufzeichnung eines Videosignals werden beispielsweise Fernsehsignale in bekannter Weise empfangen und in Luminanz- und Chrominanzsignal getrennt. Diese Signale werden der Einrichtung nach Figur 2 zugeführt. Am PAL-Decoder 20, der wie der bekannte PAL-Decoder aus Figur 4 aufgebaut ist, liegt ein der Figur 5a entsprechendes Chrominanzsignal C an. Die an den Ausgängen des PAL-Decoders 20 zur Verfügung stehenden Farbdifferenzsignale werden zwei gleichen Signalverabeitungszweigen zugeführt. Zunächst werden die Farbdifferenzsignale mit Tiefpaßfiltern 30 bzw. 40 auf eine Bandbreite, z.B. 700 kHz, begrenzt. Die so erzeugten Basisbandsignale werden mittels der Analog/Digital-Wandler 31 bzw. 41 digitalisiert, wobei die Farbdifferenzsignale unterabgetastet werden. Die verwendete Abtastfrequenz erfüllt dabei die Forderung des Abtasttheorems. Um beliebige, auch bewegte, Bildinhalte verarbeiten zu können wird, wie oben beschrieben, eine vertikale Vorfilterung bei ungeradzahligen Vielfachen der halben Zeilenfrequenz vorgenommen. Dazu dienen die Filtereinrichtungen 32 bzw. 42, die beispielsweise Zeilenkammfilter sein können. Bei der anschließenden Digital/Analog-Wandlung durch die Digital/Analog-Wandler 33 bzw. 43 erfolgt die eigentliche Unterabtastung der Farbdifferenzsignale dadurch, daß nicht alle zur Verfügung stehenden Digitalwerte zur Bildung der Analogsignale verwendet werden. Die so erzielte Abtastfrequenz entspricht einem Vielfachen der Zeilenfrequenz mit einem Offset einer halben Zeilenfrequenz, z.B. dem 50,5-fachen der Zeilenfrequenz. Für den Offset sind auch andere Werte möglich, beispielsweise kann der Offset um eine halbe oder viertel Bildwiederholfrequenz, wie beim PAL-Verfahren üblich, vergrößert werden. Nach einer Begrenzung der unterabgetasteten Signale durch die Tiefpaßfilter 34 bzw. 44 auf die zur Aufzeichnung zur Verfügung stehende Bandbreite, z.B. 400 kHz, werden die Farbdifferenzsignale U bzw. V entsprechend dem PAL-Verfahren moduliert und nach dem Under-Color-Verfahren aufgezeichnet. Gleichzeitig erfolgt die Aufzeichnung des durch die Verzögerungseinrichtung 10 zeitlich angepaßten Luminanzsignals Y als frequenzmoduliertes Signal.

Im Fall der Wiedergabe eines Videosignals, das wie oben beschrieben aufgezeichnet wurde, kann zur Luminanz- und Chrominanzsignalverarbeitung ebenfalls eine Einrichtung wie in Figur 2 dargestellt verwendet werden. Das in bekannter Weise vom Luminanzsignal Y getrennte Chrominanzsignal C wird dem PAL-Decoder 20 zugeführt. Der PAL-Decoder 20 entspricht bei der Wiedergabe dem erfindungsgemäß erweiterten PAL-Decoder nach Figur 1. Im Unterschied zum nach dem Stand der Technik bekannten PAL-Decoder (Figur 4) weist der erfindungsgemäße PAL-Decoder zwei zusätzliche Synchrondemodulatoren 6 und 7 sowie zwei Addierer 8 und 9 auf.

Der Synchrondemodulator 7 wird wie der Synchrondemodulator 4 mit der Frequenz f₁ betrieben, wohingegen die Synchrondemodulatoren 5 und 6 mit der Frequenz f₂ betrieben werden. Die Frequenzen f₁ und f₂ sind zueinander orthogonal und die Phasenlage der Frequenz f₂ wird zeilenweise um 180^{o} umgepolt. Der Synchrondemodulator 6 ergänzt den am Ausgang des Addierers 2 anliegenden Synchrondemodulator 4 zu einem Quadraturdemodulator. Dadurch ist es möglich, mit dem Synchrondemodulator 4 die U-Komponente und mit dem Synchrondemodulator 6 die mit ihr wegen der Unterabtastung verbundene V*-Komponente (siehe Figur 5b) zu demodulieren. Ebenso ist es durch die Ergänzung des Synchrondemodulators 5 durch den Synchrondemodulator 7 möglich, neben der V-Komponente auch die U*-Komponente des am Ausgang des Subtrahierers 3 anliegenden Signals zu demodulieren. Die vom Synchrondemodulator 4 demodulierte U-Komponente wird vom Addierer 8 mit der vom Synchrondemodulator 7 demodulierten U*-Komponente zum U-Farbdifferenzsignal zusammengefaßt. Der Addierer 9 faßt die vom Synchrondemodulator 5 demodulierte V-Komponente mit der vom Synchrondemodulator 6 demodulierten V*-Komponente zum V-Farbdifferenzsignal zusammen.

Die Farbdifferenzsignale werden durch Tiefpaßfilter 30 bzw. 40 auf ein Basisbandsignal beschränkt, das beispielsweise eine Bandbreite von 400 kHz hat. Anschließend erfolgt die Umkehrung der vor der Aufzeichnung erfolgten Unterabtastung. Dazu werden die Farbdifferenzsignale von den Analog/Digital-Wandlern 31 bzw. 41 nochmals mit der bei der Unterabtastung verwendeten Abtastfrequenz abgetastet und digitalisiert.

Die entstehenden Spiegelfrequenzen der Oberwellenspektren ergänzen das Basisbandsprektrum (bis 400 kHz) so, daß ein Signal mit der ursprünglichen Bandbreite (700 kHz) verfügbar ist. Mittels der Filtereinrichtungen 32 bzw. 42 werden Signalanteile bei ungeradzahligen Vielfachen der halben Zeilenfrequenz entfernt. Nach der Digital/Analog-Wandlung durch die Digital/Analog-Wandler 33 bzw. 43 erfolgt eine Tiefpaßfilterung mittels der Tiefpaßfilter 34 bzw. 44 mit einer Grenzfrequenz von beispielsweise 700 kHz. Die Farbdifferenzsignale U bzw. V stehen für die weitere Signalverarbeitung, z.B. zur Anzeige auf einem Fernsehgerät, zusammen mit dem durch die Verzögerungseinrichtung 10 verzögerten Luminanzsignal Y zur Verfügung.

Vom Ausführungsbeispiel abweichende Realisierungsformen, die sich beispielsweise aus der Verwendung einer Verzögerungseinrichtung mit einer Verzögerungszeit größer als einer Zeilendauer ergeben, sind ohne weiteres von der Beschreibung abzuleiten.

## Patentansprüche

1. Verfahren zum Decodieren eines PAL-Chrominanzsignals, welches durch PAL-Codierung zweier unterabgetasteter Farbdifferenzsignale gebildet wurde, mit Bildung der Komponenten des Chrominanzsignals durch eine Laufzeitdecodierung und anschließender Synchrondemodulation der Komponenten des Chrominanzsignals mit zueinander orthogonalen Demodulationsfrequenzen und zeilenweiser Umpolung der Phase einer der beiden Demodulationsfrequenzen um 180^{o},
**dadurch gekennzeichnet,**
daß jede der Komponenten des Chrominanzsignals zusätzlich mit einem Synchrondemodulator mit der Demodulationsfrequenz der jeweils anderen Komponente des Chrominanzsignals demoduliert wird, und daß die mit gleichen Demodulationsfrequenzen demodulierten Signale zusammengefaßt werden.

2. Erweiterter PAL-Decoder zum Decodieren eines PAL-Chrominanzsignals, welches durch PAL-Codierung aus zwei unterabgetasteten Farbdifferenzsignalen gebildet wurde, mit einem PAL-Laufzeitdecoder, bestehend aus einer Verzögerungseinrichtung (1), einem Addierer (2) und einem Subtrahierer (3) sowie mit einem ersten (4) und einem zweiten Synchrondemodulator (5), die mit zwei gleichen, zueinander orthogonalen Frequenzen (f₁,f₂) betrieben werden, wobei die Phasenlage der Frequenz (f₂) des zweiten Synchrondemodulators (5) bildzeilenweise um 180^{o} umgepolt wird, mit einer Verbindung des ersten Synchrondemodulators (4) mit dem Ausgang des Addierers (2) und einer Verbindung des zweiten Synchrondemodulators (5) mit dem Ausgang des Subtrahierers (3),
**dadurch gekennzeichnet,**
daß ein dritter (6) und ein vierter Synchrondemodulator (7) vorhanden ist, daß der dritte Synchrondemodulator (6) mit dem Ausgang des Addierers (2) verbunden ist und mit der Frequenz (f₂) des zweiten Synchrondemodulators (5) betrieben wird,
daß der vierte Synchrondemodulator (7) mit dem Ausgang des Subtrahierers (3) verbunden ist und mit der Frequenz (f₁) des ersten Synchrondemodulators (4) betrieben wird,
daß die Ausgänge des ersten (4) und vierten Synchrondemodulators (7) von einem Addierer (8) zu einem ersten Farbdifferenzsignal (U) zusammengefaßt werden, und
daß die Ausgänge des zweiten (5) und dritten Synchrondemodulators (6) von einem Addierer (9) zu einem zweiten Farbdifferenzsignal (V) zusammengefaßt werden.
